# EUROPEAN PATENT SPECIFICATION

(11) **EP 3 696 942 B1**
(45) Date of publication and mention of the grant of the patent: **18.11.2026**
(21) Application number: 20157517.2
(22) Date of filing: 14.02.2020
(51) Int. Cl.: H02J 50/12, B60L 53/122

(54) **CONTINUOUS CONTROL OF A CONTACTLESS ELECTRICAL ENERGY TRANSFER SYSTEM**
KONTINUIERLICHE STEUERUNG EINES SYSTEMS ZUM KONTAKTLOSEN TRANSFER VON ELEKTRISCHER ENERGIE
COMMANDE CONTINUE D'UN SYSTÈME DE TRANSFERT D'ÉNERGIE ÉLECTRIQUE SANS CONTACT

(30) Priority: 15.02.2019 NL 2022589
(43) Date of publication of application: 19.08.2020
(73) Proprietor: Prodrive Technologies Innovation Services B.V., 5692 EM Son en Breugel (NL)
(72) Inventor: SLAATS, Noud Johan Hubert, 5692 EM Son (NL); EVERTS, Jordi, 5692 EM Son (NL)
(74) Representative: Arnold & Siedsma

(56) References cited:
- EP-A1- 3 220 505
- DE-A1- 102012 210 930
- DE-A1- 102015 223 230
- US-A1- 2010 201 204
- US-A1- 2014 203 658
- US-A1- 2015 198 640
- US-A1- 2017 080 814
- US-A1- 2018 159 382
- US-A1- 2018 236 879

## Description

### Technical field

The present invention is related to a method of operating a contactless (or wireless) electrical energy transfer system based on a control program that continuously determines/estimates system parameters, such as coupling factor and inductance. The present invention is also related to a contactless (or wireless) electrical energy transfer system that incorporates such control program.

### Background art

Contactless electrical energy transfer (CEET) is a known alternative for wired or conductive power transfer. It is used for mobile consumer electronic devices that are battery operated. These devices are charged wirelessly by means of induction by placing a device equipped with a secondary (receiver) coil near a charging station equipped with a primary (transmitter) coil. The primary coil, which is driven by an alternating current (AC), generates an electromagnetic field which induces an alternating current in the secondary coil that may be used to power the device or charge the batteries of the device. Typically, in these applications the air gap between the coils is small and the coils are well aligned, and a high magnetic coupling factor k (e.g. k>0.5) is achieved that ensures efficient power transfer without significant energy losses.

Lately, there is an increasing interest to wirelessly charge electric vehicles and hybrid electric vehicles. In these applications the coils are only weakly coupled (e.g. coupling factor k smaller than 0.5, e.g. in the range 0.1-0.3) with a large self-inductance and a low mutual inductance, due to the larger air gap (e.g. on the order of 15 cm or more) and larger axial misalignment (e.g. on the order of a few cm) between the primary and the secondary coil.

DE 10 2015 223 230, 24 May 2017, discloses a CEET system with primary and secondary resonator circuits for inductive power transfer. The secondary resonator circuit comprises a series connection of a resonator coil and a resonator capacitor. The CEET system further comprises a switching unit, a current sensing unit and a control unit. The switching unit is configured to short the secondary resonator circuit. A test voltage is then applied by the control unit to the primary resonator circuit. This induces a current in the shorted secondary resonator circuit, which is measured by the current sensing unit. The control unit compares the measured current with a threshold and will only allow energy transfer if the measured current exceeds the threshold, which may be an indication that the primary and secondary coils are correctly aligned and/or that the system is free of errors. One disadvantage of such a system is that only the initiation of energy transfer is controlled whereas the performance of the energy transfer during operation is not.

US 2017/0080814, 23 March 2017, discloses a CEET system including a first coil configured to be loosely inductively coupled to a second coil. The first coil may be part of a vehicle charging station and the second coil may be part of a vehicle. A controller is programmed to command a short circuit between terminals of the second coil and apply a test voltage to the first coil. The controller is programmed to estimate system parameters, such as self-inductances and mutual inductance, based on voltage and current measurement from only the first or the second coil. The parameters may be utilized to control transfer of energy to the vehicle, for instance by changing an impedance value of a selectable impedance network coupled to the transmit and/or receive coil. A Kalman filter recursive parameter estimation is used in order to reduce the error between a measured transmit coil current and an estimation of that current derived from a model defined by the system parameters. The error is used to update the parameter estimates, so that the parameter estimates converge to final values and the error is driven to approximately zero. For estimating the system parameters, the secondary inductive coil circuit is shorted and therefore, the method can only be used during an initial system identification phase prior to normal operation.

EP 3220505 describes a method of controlling an inductive power transfer system, wherein operating conditions of the inductive power transfer system are detected by measuring at least one electric variable over time at the primary side of the inductive power transfer system and analysing the electric variable for detection of the operating condition at the secondary side without use of measurement data measurable at the secondary side. The electric variable is analysed by comparing with fixed threshold values. A problem with using threshold values is that they only detect conditions outside an operating window, but do not give an indication of how optimal the system operates within the operating window.

US 2018/236879 describes a real-time control method for a wireless power transfer system, in which primary and secondary coil parameters are estimated based on current and voltage measurement both at the primary side and the secondary side. These single-phase current and voltage values are converted to a three-phase representation in a dedicated reference frame allowing to determine primary and secondary flux linkages and currents. The primary and secondary coil parameters are estimated based on the flux linkages and currents. In order to be able to do this, exact time-relationship (e.g. phase angle information) between primary side current and voltage and secondary side current and voltage is required, which in turn requires synchronization and a high-speed communication system between the primary and the secondary side.

### Summary of the invention

It is an aim of aspects of the present invention to provide a method and system allowing for improving power transfer efficiency and/or power transfer control in a CEET system. It is an aim of aspects of the present invention to provide a method and system allowing for continuously controlling/monitoring the efficiency of power transfer in such CEET systems. It is an aim of aspects of the present invention to provide such methods and systems that are able to control operation more accurately and/or that allow for ensuring that the CEET system operates at optimum efficiency. It is an aim of aspects of the present invention to provide a simpler method of controlling operation of a CEET system, which is less complex, more economical and/or easier to implement.

According to a first aspect of the invention, there is therefore provided a method of operating a contactless electrical energy transfer (CEET) system as set out in the appended claims. The CEET system comprises a first side comprising a first inductive coil circuit and a second side comprising a second inductive coil circuit configured to transfer electrical power between one another.

A model of the real CEET system is defined by one or more first model parameters, defining the first side, and by one or more second model parameters, defining the second side. The one or more first model parameters comprise a parameter representative of a magnetic quantity (characteristic) of the first inductive coil circuit, i.e., an inductance of the first inductive coil circuit, and advantageously a parameter representative of an electric characteristic of the first inductive coil circuit, e.g. an impedance. The one or more second model parameters comprises a parameter representative of a magnetic quantity (characteristic) of the second inductive coil circuit, i.e., an inductance of the second inductive coil circuit, and advantageously a parameter representative of an electric characteristic of the second inductive coil circuit, e.g. an impedance. The model is complemented with a third model parameter defining a (magnetic) coupling between the first side and the second side, i.e., a coupling factor or mutual inductance between the first and the second inductive coil circuits.

The CEET system is operated in an operating point, defined by input parameters, such as duty cycles of applied AC voltages, and switching periods representative of the oscillation frequency of the applied AC voltages at first and second side. In the operating point, operation parameters, such as AC voltage, AC current, DC voltage, and DC current can be measured while transferring electrical power between the first side and the second side: first operation parameters are measured at the first side and second operation parameters are advantageously measured at the second side. The operating point is advantageously a point of normal operation of the CEET system, in particular where power is transferred to charge a load. It will be appreciated that in the operating point, a bridge rectifier at the second side and coupled to the second inductive coil circuit provides an output, in particular for charging a load, e.g. a traction battery of an electric vehicle. The operating point therefore does not refer to a condition in which the second inductive coil circuit is shorted.

Adapted values of the one or more second model parameters are determined on the basis of the values of the first operation parameters and the one or more first model parameters. Adapted values of the one or more first model parameters are likewise determined on the basis of the values of the second operation parameters and the one or more second model parameters.

The above method can be applied iteratively to allow for convergence of an output of the model and a corresponding output of the real CEET system. At each iteration step, the model is advantageously updated with the adapted values. The updated model is advantageously used in a control algorithm for determining or monitoring the operating point of the real CEET system, e.g. to check whether the CEET system operates in an optimal operating point from an efficiency point of view. The determined first and/or second model parameters can therefore be used in a control scheme for inductive power transfer to improve system efficiency and power control, and may be used to (continuously) verify alignment between power transfer coils. Alternatively, or in addition, the updated model (updated model parameters) can be used for detecting possible errors and/or malfunctions in the CEET system.

According to a second aspect of the invention, there is provided a CEET system as set out in the appended claims. The CEET system is implemented with the method according to the first aspect.

With methods according to present aspects, a model of the system is continuously updated during power transfer. This allows for keeping the model matched with the real system during operation, even when unexpected changes to the real system occur, e.g. unexpected displacement of the mobile side with respect to the ground side. By using the model in a control algorithm of the CEET system, a convergence to an optimal operating point can be ensured. Such an optimal operating point is advantageously one which ensures optimum efficiency.

One problem with continuous operation control in CEET systems, is that it is very difficult to reliably measure a phase angle between a primary side voltage or current and a secondary side voltage or current, due to the contactless character of the system, the fact that the two sides are typically controlled by local controllers, and the absence of reliable high-speed wireless communication between the two sides. As a result, a time relationship between primary side electrical quantities and secondary side electrical quantities is lacking which prevents simple and straightforward control algorithms to be implemented.

This problem is obviated by updating one or more model parameters relating to one side, e.g. relating to the second side, based on measurements of operation parameters, such as voltages and currents, of the other side, and by (previously determined) model parameters. Hence, in determining (updated) model parameters relating to the second side, there is no need to (synchronously) measure operation parameters at the second side, but only at the first side. As a result, it is not required to measure any phase angle between a first side operation parameter and a second side operation parameter accurately. A convergence can be obtained by simple iteration.

Therefore, values of the second operation parameters are not used when determining the adapted value of the second model parameter. Likewise, values of the first operation parameters are advantageously not used when determining the adapted value of the first model parameter.

Determining the adapted value of the second model parameter comprises determining a phase angle, between an AC current or voltage of the first side and an AC current or voltage of the second side based on the values of the first operation parameters and the at least one first model parameter, and without using values of the second operation parameters. Likewise, determining the adapted value of the first model parameter comprises determining a phase angle, between an AC current or voltage of the first side and an AC current or voltage of the second side based on the values of the second operation parameters and the at least one second model parameter, and without using values of the first operation parameters.

In the present context, the terms first and second may be used interchangeably with the terms primary and secondary, although it is possible that the terms be reversed, e.g. the term first may refer to secondary, and second may refer to primary.

Further advantageous aspects are set out in the dependent claims.

### Brief description of the figures

Aspects of the invention will now be described in more detail with reference to the appended drawings, wherein same reference numerals illustrate same features.
FIG. 1 represents a block diagram of a contactless electrical energy transfer system with AC (e.g. the AC mains) input.
FIG. 2 represents a block diagram of a contactless electrical energy transfer system according to advantageous aspects of the present invention.
FIG. 3 represents a schematic of the inductive coupled power stage with a primary side series resonant coil circuit, a primary side controlled full-bridge circuit, a secondary side series resonant coil circuit, and a secondary side controlled full-bridge circuit as an example embodiment of aspects of the present invention.
FIG. 4 represents a flow diagram of a method of estimating parameters of a CEET system according to aspects described herein.
FIG. 5a represents a plot of an applied example test voltage to a primary side of a CEET system when terminals of the secondary side coil circuit are shorted. The test voltage is set to zero at time = 2 ms by shorting terminals of the primary side coil circuit. FIG. 5b represents a plot of the resulting current flowing in the primary side coil circuit. FIG. 5c represents a plot of the resulting current flowing in the secondary side coil circuit.
FIGs. 6a-c represent enlarged views of the plots of Figs. 5a-c respectively.
FIG. 7 represents schematically different modules of the global controller.
FIG. 8 represents a lumped parameter model used for modelling the CEET system according to aspects of the present invention.

### Description of embodiments

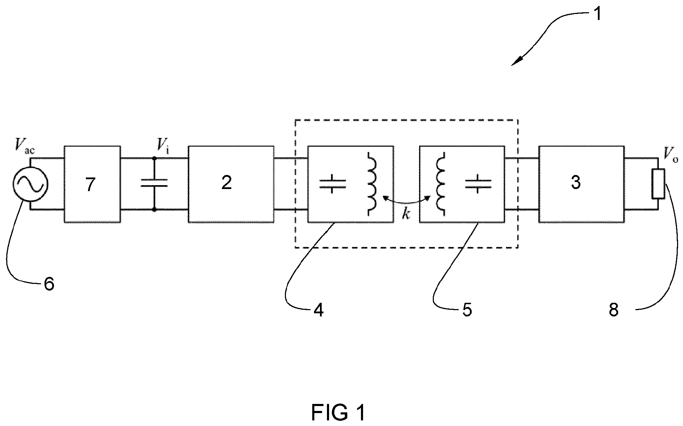

Referring to FIG. 1, a typical CEET system 1 comprises a transmitter 2 and a receiver 3. The transmitter 2 typically generates an AC signal from a DC power source and is therefore referred to as 'inverter'. The AC signal is applied to a primary-side coil circuit 4 and transmitted to a secondary-side coil circuit 5 through magnetic coupling via an air gap and further conditioned by the receiver 3 to provide the desired power to the load 8, for example a battery of an electric vehicle. Since the load typically accepts DC power, the receiver 3 is referred to as 'rectifier'. The inverter 2 can for example be a full bridge circuit with active semiconductor components while the rectifier 3 can, for example, be a passive diode bridge rectifier.

As shown in FIG. 1, generally, the input of the inverter 2 is a DC voltage, which can be generated from an AC power source 6 by an additional rectifier 7 placed at the input of the inverter 2. Both the primary-side coil circuit 4 and the secondary-side coil circuit 5 are advantageously arranged as resonator circuits comprising a coil and a capacitor coupled thereto, either in series or in parallel.

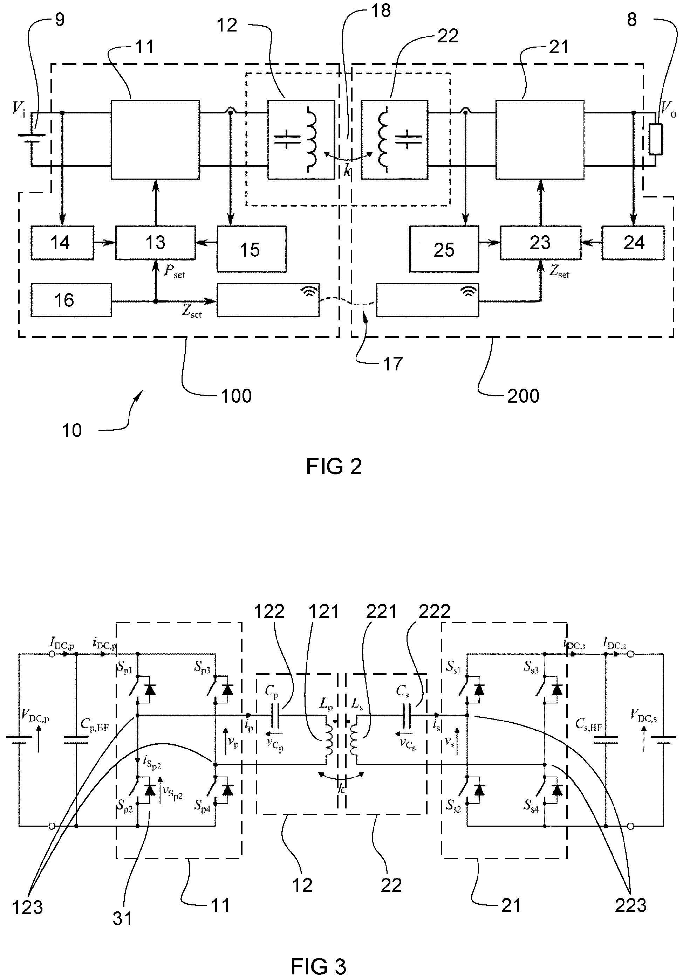

FIG. 2 shows a block diagram of a contactless electrical energy transfer (CEET) system 10 according to aspects of the present invention. The input 9 to CEET system 10 is shown as a DC power source, but may equally be an AC source (e.g. AC mains) coupled to a rectifier as shown in FIG. 1. The CEET system 10 comprises a primary side 100 configured for inductive coupling to a secondary side 200. It will be convenient to note that the secondary side may be mobile, and that the primary side 100 may be used for sequentially transferring power to different secondary sides 200, e.g. different vehicles.

The primary side 100 comprises a bridge inverter 11 connected to a primary-side induction circuit 12, which in this example is provided as a resonator circuit. The inverter 11 is advantageously implemented as a full bridge circuit, and advantageously as a controlled bridge circuit, comprising at least two, advantageously four actively switchable semiconductor switches for converting the DC voltage to an AC signal. The inverter 11 is connected to the DC input 9 and converts the DC input voltage into a switched, square wave AC voltage that is applied to the primary-side resonator 12.

The secondary side 200 comprises a bridge rectifier 21 connected to a secondary-side induction circuit 21, which in this example is provided as a resonator circuit. The rectifier 21 is advantageously implemented as a full bridge circuit, and advantageously as a controlled bridge circuit, comprising at least two, advantageously four actively switchable semiconductor switches for converting the AC current provided at the output terminals of the secondary-side induction circuit to a DC current which is provided to a DC load 8.

One of the bridge circuits 11 or 21, for example the inverter 11, is operated with a driving frequency while the other, for example the rectifier 21, operates with a following frequency. The pulse signals used to drive the bridge circuits are generated by local controllers 13, 23 of the primary side and secondary side, respectively. Either one or both the primary side 100 and the secondary side 200 may further comprise respective voltage sensing units 14, 24 to sense voltage input to the inverter 11 or output from rectifier 21. In addition, the primary side 100, and possibly also the secondary side 200 further comprises sensing units 15, 25 for sensing the AC current that flows between the respective bridge circuit 11, 21 and the corresponding induction circuit 12, 22. Current sensing units 15, 25 may be configured to sense the phase and/or magnitude, or even to sample the AC current in order to reconstruct its waveform.

One of the local controllers 13, 23, for example the primary side controller 13, is configured to generate control pulses that are of a driving frequency (switching frequency). The other local controller, for example the secondary side controller 23, is configured to generate pulses that are of following frequency (i.e. following the driving frequency). One of the local controllers, for example the primary side controller 13, may be implemented as power controller to regulate the input power of the inverter 11. The other local controller, for example the secondary side controller 23, may be implemented as impedance controller to regulate the active and/or the reactive part of the impedance of rectifier 21. The power and the impedance is advantageously controlled/regulated cycle by cycle (or half-cycle by half-cycle).

A main controller 16, e.g. provided at the input side, may be configured to generate high-level set-points for the local controllers 13 and 23, for example a power set-point for the local power controller (e.g. 13), and optionally an impedance set-point for the local impedance controller (e.g. 23). The power set-point defined by the main controller 16 may be based on external inputs such as for example the charge state of a battery acting as load 8. The impedance set-point defined by the main controller 16 may be defined such that the system efficiency is optimized for each power set-point and for each specific condition of the input and/or output voltage, the coupling factor, and the self-inductance values, for example by minimization of the circulating currents in the induction circuits while maintaining zero voltage switching (ZVS) and/or zero current switching (ZCS) conditions in both the inverter and rectifier device. The main controller 16 may also be configured for the calculation of other free control parameters such as for example the switching frequency of the driving switching circuit.

Communication between the main controller 16 and the local controllers 13, 23 may be implemented using wired or wireless communication. By way of example, main controller 16 is coupled to local controller 13 through a wired communication interface. Coupling between main controller 16 and local controller 23 at the secondary side can be implemented through a wireless communication interface 17, which advantageously need not be high-speed, e.g. communication speed lower than the driving frequency.

The primary side and secondary side induction circuits 12, 22 comprise coils that are electrically isolated from each other and that are coupled through an air gap 18 with a coupling factor k. The induction circuits are advantageously implemented with a resonant topology in order to efficiently recover the energy stored in the relatively large self-inductances of the air transformer. Generally, any resonant topology can be used for both the primary-side and secondary-side resonators.

An example of power control implementation will now be described for the case inverter 11 is operated with driving frequency. At the primary side (input), the DC input voltage of the inverter 11 and the magnitude and phase of the AC output current of the inverter are sensed by means of sensing units 14 and 15 respectively. The AC square-wave voltage generated by the inverter 11 is of driving frequency which may be set in dependence on the coupling factor, the demanded power level, and the input and output voltages of the CEET system in order to maximize efficiency. The phase of the AC square-wave voltage is serving as a reference (driving frequency) and advantageously does not change during operation, i.e. the phase information of the output current of the inverter 11 is obtained by sensing unit 15 with reference to the AC square-wave voltage generated by the inverter. The sensed input voltage (by unit 14), the sensed current, and the sensed phase (by unit 15) may be used to control the pulse-width of the AC square-wave voltage generated by the inverter 11, such that the power that is transferred from the inverter 11 to the primary side resonator 12 is maintained substantially constant and independent of output voltage changes and load changes.

At the secondary side (output), the DC output voltage of the rectifier 21 and the magnitude and phase of the AC input current to the rectifier are sensed by units 24 and 25 respectively. An AC square-wave voltage is generated by the rectifier 21 and is of following frequency, i.e. the AC square-wave voltage is applied with reference to the phase of the AC input current of the rectifier. The sensed output voltage by unit 24 and the sensed current by unit 25 can be used as input to the secondary side controller 23 which is advantageously configured to control the phase and the pulse-width of the AC square-wave voltage generated by the rectifier, such that the impedance of the rectifier is regulated. The frequency of the AC square-wave voltage generated by the rectifier 21 is following the frequency of the AC input current of the rectifier, and settles at the driving frequency (switching frequency) of the inverter 11. During transients such as power changes, input voltage and output voltage changes, and changes of the coupling factor, the two frequencies may however differ from each other.

The sensing units 15 and 25 may comprise a current measurement transformer with zero-crossing detection circuit for sensing phase and magnitude information of the output current of the inverter 11 and of the input current of the rectifier 21.

FIG. 3 shows an electric circuit diagram of an exemplary embodiment of a system according to an aspect of the present invention, e.g. of CEET system 10 of FIG. 2. Both bridge circuits of the primary side and the secondary side (inverter 11 and rectifier 21 respectively) are advantageously arranged in the form of a full-bridge circuit, each comprising four actively controlled semiconductor switching devices Sₚ₁ - Sₚ₄ and Sₛ₁ - S_{S4} respectively, which are shown with their internal antiparallel diodes 31. Each full bridge is able to generate a three-level ≤ 50% duty-cycle AC square wave voltage at the resonator terminals 123 and 223 respectively.

Furthermore, in the above example, both the primary side and secondary side resonators 12, 22 are implemented as a series connection of an energy transfer coil 121, 221 and a series capacitor 122, 222 respectively, wherein each series connection forms a resonant tank. Still referring to FIG. 3, the input power source and the load may both be replaced by a voltage source, i.e. V_{DC,p} and V_{DC,s} respectively, under the assumption that the input voltage and output voltage are constant and have negligible ripple. This is because the high-frequency content of the input current *i*_{DC,p} of the primary side bridge circuit 11 and of the output current *i*_{DC,s} of the secondary side bridge circuit 21 are advantageously filtered by high-frequency filter capacitors C_{p,HF} and C_{s,HF}, respectively, facilitating smooth DC currents *I*_{DC,p} and *I*_{DC,s}, and smooth DC voltages *V*_{DC,p} and *V*_{DC,s}.

In order to verify if power transfer is possible and to determine how to control the CEET system, it is advantageous to have information about the circuit parameters. In particular, it will be convenient to determine parameters related to the coupled inductors, as they are highly dependent on the alignment and distance of the primary side coil with respect to the secondary side coil. Accurately determining these parameters makes it possible to operate the CEET system with optimum efficiency.

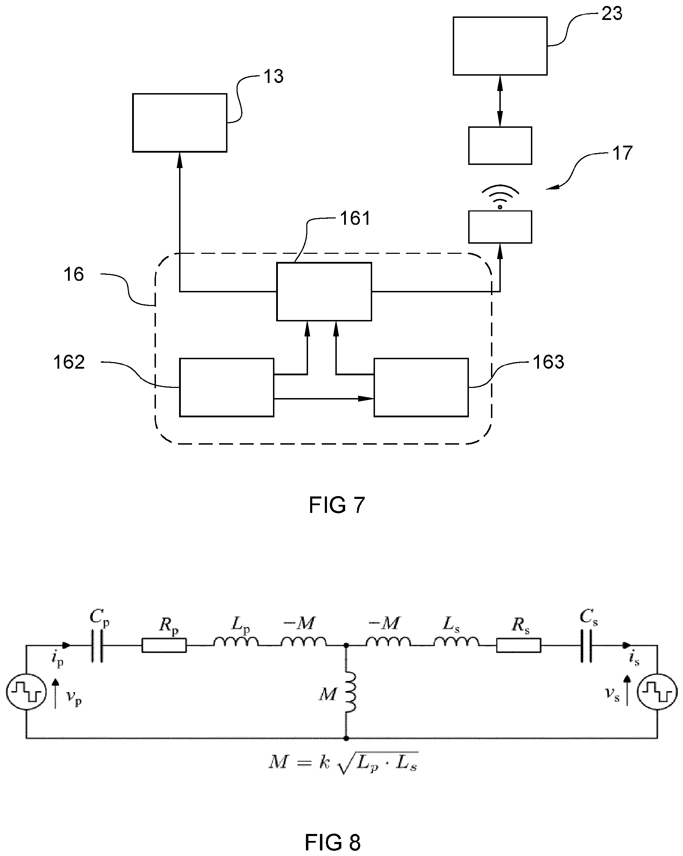

Referring now to Fig. 7, the global controller 16 advantageously determines the optimal set points, such as power and impedance set points, for the local controllers 13, 23, e.g. using an optimization algorithm. The global controller is advantageously located at the primary side 100. The set points can be communicated over a low-speed communication link 17. This link is wireless between primary and secondary side (e.g. Wi-Fi).

A set point optimization (SPO) module 161 in the global controller 16 is configured to determine optimal set points. SPO module can implement an optimization algorithm as known in the art. Advantageously, set points are determined based on a model of the CEET system. To this end, the SPO module 161 implements a model of the CEET system with which the optimal set points are determined. The model is defined by model parameters. The parameters of this model are advantageously determined in a parameter characterizing (PC) module 162. PC module 162 may be configured to determine the model parameters before charging operation starts, and/or before set points are determined. Parameter characterization can be performed based on known methods, or by a method as described further below, and described in WO 2019/180100, 26 September 2019.

According to aspects of the invention, the model is regularly, e.g. during power transfer, updated with adapted model parameters. A model matching (MM) module 163 is advantageously used for this purpose. MM module 163 is configured to determine updated values for the model parameters based on a model matching algorithm, and may start with the initial values as determined by PC module 162. The updated model parameters are then supplied to the SPO module 161 in order to update the set points to an optimal level.

### System modelling

According to an aspect a lumped parameter model is set up for the CEET system, as shown in Fig. 8. In the lumped parameter model, the primary side is defined by the inductance *Lₚ* of the primary energy transfer coil 121, and the secondary side is defined by the inductance *Lₛ* of the secondary energy transfer coil 221. In case of resonant circuits, a capacitance *Cₚ* and *Cₛ* can be modelled for the primary and secondary side, respectively, which may be coupled either in series or in parallel with the inductances. In addition, resistive losses are advantageously modelled through resistors *Rₚ* and *Rₛ* respectively, which may be arranged in series with the inductances. The model can further comprise parameter associated with the magnetic interaction between the two sides, e.g. a mutual inductance M: $M = k ⋅ \sqrt{{L}_{p} {L}_{s}} ,$ with k representing the coupling factor between the energy transfer coils 121 and 221. The mutual inductance M is generally coupled in parallel with the primary side lumped parameter circuit and with the secondary side lumped parameter circuit. An equal but negative inductance -M is advantageously coupled in series with either one or both inductances *Lₚ* and *Lₛ*.

### Determining initial model parameters

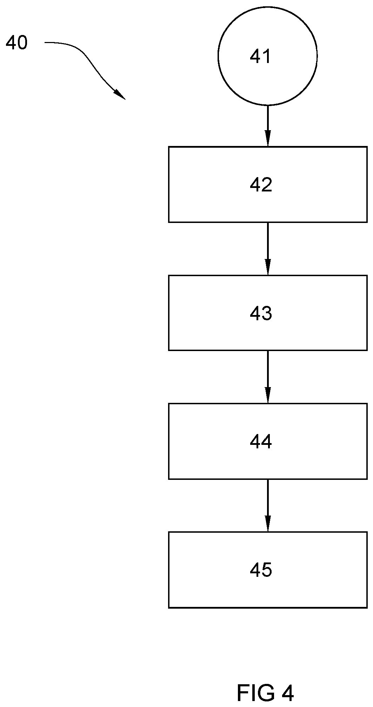

Determining initial values of the model parameters *Lₚ, Lₛ, M, Cₚ, Cₛ*, *Rₚ* and *Rₛ* can be performed by the parameter characterizing module 162. Initial values of the parameters of the lumped parameter model are advantageously determined before starting power transfer. To this end, a test sequence can be set up, in order to test the inductively coupled (resonator) coil circuits 12, 22 and to determine the parameters thereof. Referring to FIG. 4, a method 40 of initially estimating or determining these parameters may proceed as detailed below.

In operation 41, the secondary coil 221 is inductively coupled to the primary coil 121. Either one of the primary coil and the secondary coil can be mobile, and therefore operation 41 may comprise bringing the coils in close vicinity. Typically, in case of charging of electric vehicles, the secondary side 200 is located on the vehicle. The vehicle, and with it the secondary side 200 may be brought in close vicinity to the primary side 100 using suitable positioning sensors.

In operation 42, the secondary coil circuit 22 is shorted. In particular, secondary terminals 223 are shorted, meaning that the electrical connection between the secondary coil circuit 22 and the rectifier 21 is shorted. In the particular case of FIG. 3, this means that the resonator circuit 22, including secondary coil 221 and capacitor *C_{S}*, are shorted. There are various ways for accomplishing this. One suitable example is by closing the bottom semiconductor switches Sₛ₂ and S_{S4} of the bridge circuit of rectifier 21 in FIG. 3. Alternatively, the top semiconductor switches Sₛ₁ and S_{S3} of the bridge circuit of rectifier 21 can be closed. In a yet alternative example, e.g. when the bridge circuit of rectifier 21 cannot be actively switched, an additional circuit can be provided between secondary terminals 223, e.g. as described in DE 10 2015 223 230, FIG. 2.

In operation 43, a test voltage *v_{P}* is applied to the terminals 123 of the primary coil circuit. The test voltage is an alternating (AC) voltage having a waveform with advantageously a fixed excitation frequency and advantageously a constant magnitude. The excitation frequency can be chosen to be at some distance, e.g. a few kHz, from the expected resonance frequency of the resonator circuits 12 and 22. The test voltage at terminals 123 will induce a primary current *i_{P}* in the primary coil circuit 12, and due to the inductive coupling between circuits 12 and 22, a secondary current *i_{S}* will be induced in the secondary coil circuit 22, and more particularly in the short-circuit connection through terminals 223.

The amplitude of the currents *i_{P}* and *i_{S}* is measured by current sensing units 15 and 25, respectively. If the current amplitude is too low, the local controller 13 and/or main controller 16 may be set to increase the frequency or duty cycle of the AC voltage *v_{P}* until currents of suitable amplitude are sensed. The current sensing units 15, 25 measure the amplitude of primary and secondary currents *i_{P}* and *i_{S}* and input the measured currents to respective local controllers 13, 23, which in turn may input these values to main controller 16. Controller 16 may be programmed to determine the ratio of the (amplitudes of the) secondary current to the primary current *i_{S}*/*i_{P}.*

Next, in operation 44, while the secondary coil circuit 22 remains shorted as indicated above, the primary coil circuit is shorted, e.g. at terminals 123. There are various ways for accomplishing this. One suitable example is by closing the bottom semiconductor switches Sₚ₂ and Sₚ₄ of the bridge circuit of inverter 11 in FIG. 3. Alternatively, the top semiconductor switches Sₚ₁ and Sₚ₃ of the bridge circuit of inverter 11 can be closed. In a yet alternative example, an additional circuit can be provided between primary terminals 123 in order to close (short circuit) the terminals 123. One advantage of using a bridge circuit with actively switchable semiconductor switches, e.g. field effect transistors (FETs), is that no additional hardware is required to implement methods according to aspects of the present invention.

Shorting the primary coil circuit results in a zero voltage across primary terminals 123. At the instant of shorting the primary terminals, currents are flowing both through the primary coil circuit (current *i_{P}*) and through the secondary coil circuit (current *i_{S}*), which were induced by the test voltage *v_{P}* set previously in operation 43. As a result of shorting the primary terminals and the secondary terminals, the resonator circuits start oscillating wherein energy is repeatedly exchanged between the capacitive and inductive elements. This energy dampens out due to losses in the circuits. As a result, the currents *i_{P}* and *i_{S}* dampen out.

In operation 45, the parameters are determined, advantageously by processing measurements obtained in operation 43, and further by processing measurements obtained in operation 44, in particular of the current *i_{P}* and/or *i_{S}* while these dampen out. In case the primary and secondary coil circuits are formed as resonator circuits (e.g. as shown in FIG. 3), the currents will dampen out in the primary and secondary resonator circuits according to eigenfrequencies, *ωₐ* and *ω_{b},* respectively, which relate to the coupled system of primary and secondary induction circuits. There are various ways in which the eigenfrequencies *ωₐ* and *ω_{b}* can be determined from the current waveforms. One suitable example is by sampling the current and reconstructing the waveform. A Fourier transform can be applied to the waveform in order to determine an eigenfrequency. Alternatively, the time between consecutive zero crossings of the current, e.g. the primary current, can be determined, which is an indication of the eigenfrequencies. Operations for determining the eigenfrequencies *ωₐ* and *ω_{b}* can be implemented in main controller 16 and/or local controllers 13, 23.

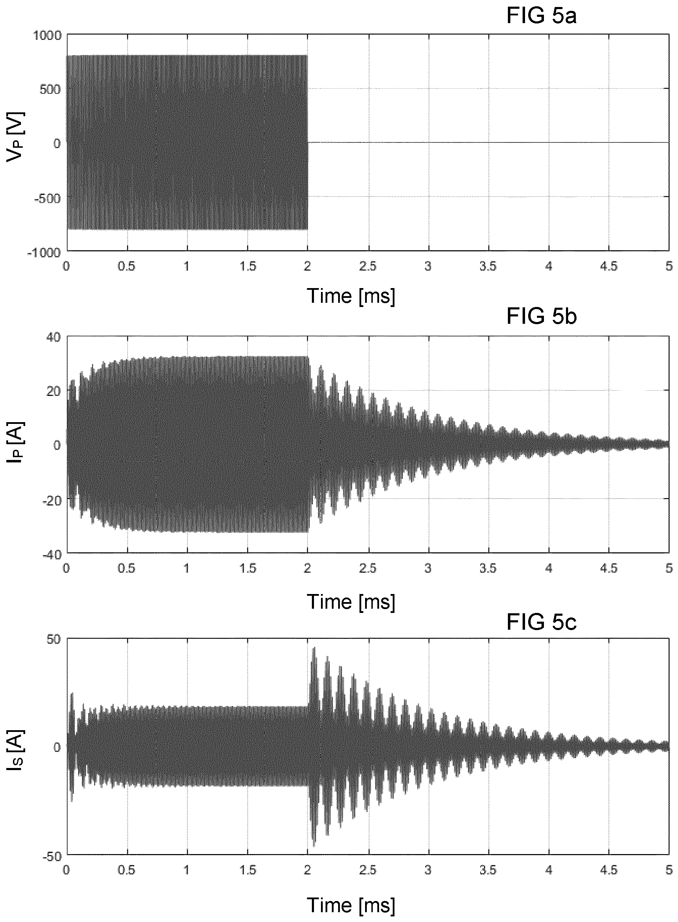

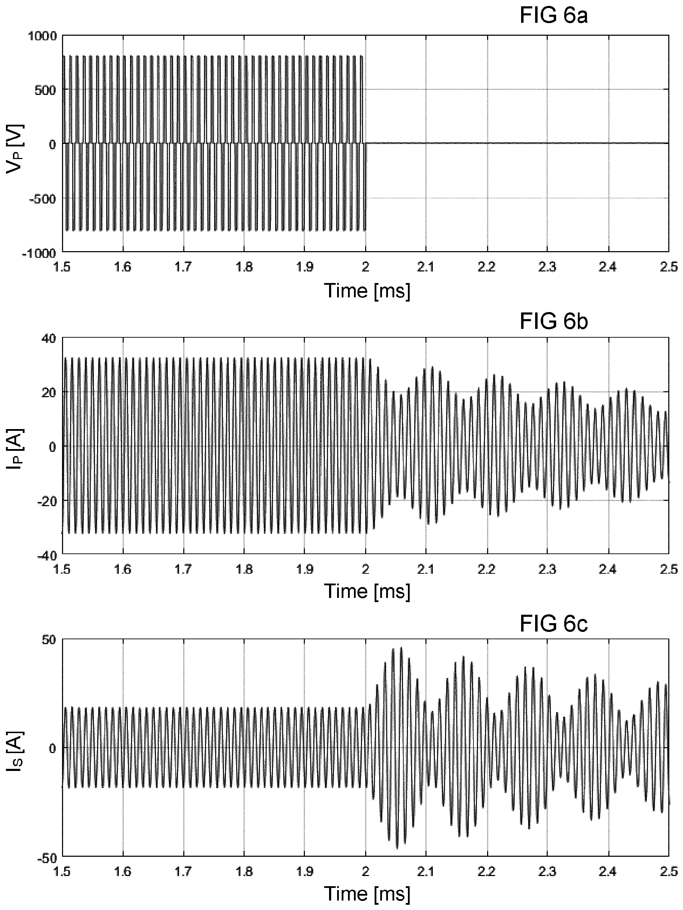

FIGs. 5a-c show example graphs of the applied test voltage *v_{P}* (FIG. 5a) at primary terminals 123 and the induced currents *i_{P}* in the primary side coil circuit (FIG. 5b) and *i_{S}* in the secondary side coil circuit (FIG. 5c). As can be seen, test voltage *v_{P}* is applied until the current amplitudes have reached a suitable level. In FIGs 5a-c, this is e.g. the case after 2 ms. The test voltage has a fixed amplitude and frequency. The amplitude of currents *i_{P}* and *i_{S}* can be measured during this time period, corresponding with operation 43. Once the current amplitudes have reached a suitable level, e.g. at time instant 2 ms, the primary terminals 123 are shorted. From this time instant, it can be seen that the currents *i_{P}* and *i_{S}* dampen out. FIGs. 6a-c show enlarged views of the graphs of FIGs. 5a-c respectively during the time frame 1.5 - 2.5 ms. It can be seen, e.g. in FIG. 6b that the frequency of the currents changes between the period in which the test voltage is applied and the period following shorting the primary terminals. As indicated above, following shorting the primary terminals, the system will start resonating at the eigenfrequencies *ωₐ* and *ω_{b}.*

On the basis of the ratio *i_{S}*/ *i_{P}* determined in operation 43, and *ωₐ* and *ω_{b}* determined in operation 45, the parameters of the inductive system 12-22: *M, Lₚ* and *Lₛ* can be determined using known equations for electric circuits. Calculations to determine the parameter values can be implemented in main controller 16.

Advantageously, additional parameters of the inductive system may be determined by performing additional measurements. By way of example, the resistive values of the primary and secondary coil circuits *Rₚ, Rₛ* may be determined by measuring a decay of the electric current *iₚ* and *iₛ*.

### Model matching algorithm

The model as described above defined by system or model parameters is updated during power transfer (i.e., during normal operation of the CEET system) according to aspects of the present invention. This can be performed by the model matching module 163. Preferred system parameters are the coupling factor (or coupling coefficient) (*k*), the primary inductance (*Lp*) and the secondary inductance (*Ls*) of CEET system 10, which are advantageously quantitatively estimated/determined. Alternatively or in addition, other (equivalent) parameters may be estimated/determined, such as mutual inductance M instead of, or in addition to, coupling factor.

For the control to function in an efficient way, the model and the real system should match as close as possible. Therefore, a model matching algorithm is used which matches the model (outputs) to the real system (outputs) , e.g. as determined by measurement, during power transfer. The model matching algorithm advantageously updates the model parameters based on measurement and old parameter models. The model parameters are advantageously continuously updated during operation of the CEET system, advantageously in an iterative manner.

One example algorithm is set out below. Known inputs to the model and to the real CEET system are the switching period *T_{sw}* and the duty cycle *Dₓ* that are applied as defined above. Measurable operational parameters are the AC voltages and AC currents *vₚ, vₛ* and *iₚ, iₛ* , and the DC voltage and current *V_{DC,p}, V_{DC,s}* and *I_{DC,p}, I_{DC,s}* input to bridge circuit 11, respectively output from bridge circuit 21, which are measured during operation.

One unknown to the system is the phase angle between an AC current or voltage at the primary side and an AC current or voltage at the secondary side, which is difficult to measure in a contactless system as it would require a perfectly synchronised measurement of the voltage and/or current waveforms at either side. According to an aspect of the invention, a calculated value of the phase angle is used instead, based on the following equations: ${α}_{{I}_{p}} = atan \left(-real\left({{I}_{s}}^{⇀}⋅{Z}_{s}+{{V}_{s}}^{⇀}\right),imag\left({{I}_{s}}^{⇀}⋅{Z}_{s}\right)\right) ,$ and ${α}_{{I}_{s}} = atan \left(-real\left({{I}_{p}}^{⇀}⋅{Z}_{p}-{{V}_{p}}^{⇀}\right),-imag\left({{I}_{p}}^{⇀}⋅{Z}_{p}\right)\right) ,$ with *αₗₚ* the angle of the primary current *iₚ,* w.r.t. the secondary voltage *vₛ*, and *αₗₛ* the angle of the secondary current *iₛ*, w.r.t. the primary voltage *vₚ. Zₚ* and *Zₛ* are the primary side and secondary side impedance, respectively and ${{I}_{p}}^{⇀}$ and ${{I}_{s}}^{⇀}$ are the primary side and secondary side current vectors.

It results from the above that a phase angle between a primary side quantity and a secondary side quantity can be determined based on measurements from only one of the primary and secondary side. This concept is exploited in aspects of the present invention to determine an updated value of model parameters at the secondary side based on measurements of primary side quantities only and vice versa. Advantageously, the value of one or more model parameters, e.g. inductance *Lₛ* at the secondary side are determined without using measured operation parameters of the secondary side, in particular without using neither a measured (AC) current value nor (AC) voltage value of the secondary side. The same applies to the primary side, where values of model parameters at the primary side are determined without using neither a measured (AC) current value nor a measured (AC) voltage value of the primary side.

As a result, the parameters of the lumped parameter model, e.g. as shown in Fig. 8 can now be determined based on the above measured quantities. The process is advantageously repeated iteratively in order to regularly or continuously update the model parameter values during operation. Advantageously, each iteration comprises a first step to calculate an estimation of a model parameter value at one side (primary or secondary), e.g. the primary inductance. In the first step, a first estimation of a magnetic coupling value, e.g. the coupling factor k is also be determined. In a second step, an estimation of a model parameter value at the other side, e.g. the secondary inductance is determined. In the second step, a second estimation of the magnetic coupling value, e.g. the coupling factor is also determined. The first and second estimations of the magnetic coupling factor can be combined, e.g. averaged, in order to obtain a faster convergence and/or increased accuracy.

By way of example, a first estimation of the coupling factor *k_{est,1},* and an estimation of primary inductance *L_{p,est}* can be calculated assuming that the secondary inductance is equal to the old value *Lₛ* (previously determined). In this assumption, the model can be evaluated where the secondary voltage is the reference with an angle of zero degrees: ${{V}_{s}}^{⇀} = {V}_{s} ,$ ${{I}_{s}}^{⇀} = {I}_{Rs} + j ⋅ {I}_{Qs} .$ The primary voltage and current in this frame are derived as: ${{V}_{p}}^{⇀} = {V}_{p} ⋅ \left(cos\left({α}_{p}+{α}_{{I}_{p}}\right)+j⋅sin\left({α}_{p}+{α}_{{I}_{p}}\right)\right) ,$ ${{I}_{p}}^{⇀} = {I}_{p} ⋅ \left(cos\left({α}_{{I}_{p}}\right)+j⋅sin\left({α}_{{I}_{p}}\right)\right) ,$ with ${α}_{p} = - atan \left({I}_{Qp}, {I}_{Rp}\right) .$ The primary inductance and first coupling factor estimation can be determined as: ${L}_{p , est} = \frac{imag \left({Z}_{p , est}\right)}{ω} + \frac{1}{{ω}^{2} {C}_{p}} ,$ ${k}_{est 1} = - \frac{{Z}_{m , est 1}}{ω \sqrt{{L}_{p , est} ⋅ {L}_{s}}} ,$ wherein: ${Z}_{m , est 1} = \frac{{{V}_{s}}^{⇀} + {{I}_{s}}^{⇀} ⋅ {Z}_{s}}{{{I}_{p}}^{⇀}} ,$ ${Z}_{p , est} = \frac{{{V}_{p}}^{⇀} + {{I}_{s}}^{⇀} ⋅ {Z}_{m , est 1}}{{{I}_{p}}^{⇀}} .$

Next, a second estimation of the coupling factor *k_{est,2},* and an estimation of secondary inductance *L*_{*s*,*est*} is calculated, assuming that the primary inductance is equal to the old value *Lₚ*. In this assumption, the model can be evaluated where the primary voltage is the reference with an angle of zero degrees: ${{V}_{p}}^{⇀} = {V}_{p} ,$ ${{I}_{p}}^{⇀} = {I}_{Rp} + j ⋅ {I}_{Qp} .$ The secondary voltage and current in this frame then are: ${{V}_{s}}^{⇀} = {V}_{s} ⋅ \left(-cos\left({α}_{s}+{α}_{{I}_{s}}\right)+j⋅sin\left({α}_{s}+{α}_{{I}_{s}}\right)\right) ,$ ${{I}_{s}}^{⇀} = {I}_{s} ⋅ \left(-cos\left({α}_{{I}_{s}}\right)+j⋅sin\left({α}_{{I}_{s}}\right)\right) ,$ with ${α}_{s} = atan \left({I}_{Qs}, {I}_{Rs}\right) .$ The secondary inductance and second coupling factor estimation can be determined as: ${L}_{s , est} = \frac{imag \left({Z}_{s , est}\right)}{ω} + \frac{1}{{ω}^{2} {C}_{s}} ,$ ${k}_{est 2} = - \frac{{Z}_{m , est 2}}{ω \sqrt{{L}_{p} ⋅ {L}_{s , est}}} ,$ wherein: ${Z}_{m , est 2} = \frac{{{I}_{p}}^{⇀} ⋅ {Z}_{p} - {{V}_{p}}^{⇀}}{{{I}_{s}}^{⇀}} ,$ ${Z}_{s , est} = \frac{{{I}_{p}}^{⇀} ⋅ {Z}_{m , est 2} - {{V}_{p}}^{⇀}}{{{I}_{s}}^{⇀}} .$

The two coupling factor estimations can then be combined to get ${k}_{est} = \frac{{k}_{est 1} + {k}_{est 2}}{2} .$

Additionally, Q factors can be adaptively updated, comparing the modeled losses: ${P}_{LossMdl} = \frac{{R}_{p} ⋅ {I}_{p}^{2} + {R}_{s} ⋅ {I}_{s}^{2}}{2} ,$ to the measured losses ${P}_{LossMeas} = {V}_{DC , p} ⋅ {I}_{DC , p} - {V}_{DC , s} ⋅ {I}_{DC , s} .$ For the model to match the measurements, the ratio between these two has to converge to one and the resistors or Q factors need to be adjusted accordingly.

Advantageously, in order to avoid sudden jumps, for all parameters, the error between the estimate value and final value is slowly regulated to zero using a controller, such as a proportional-integral controller.

## Claims

1. Method of operating a contactless electrical energy transfer , CEET, system (10) comprising a control unit (16), a first side (100) and a second side (200) comprising respectively a first inductive coil circuit (12) and a second inductive coil circuit (22) configured to transfer power between one another, wherein the second inductive coil circuit (22) is coupled to a bridge rectifier (21), the method being implemented in the control unit (16) and comprising:
operating the CEET system in an operating point wherein electrical power is transferred between the first side and the second side and wherein the bridge rectifier (21) provides an output, the operating point being defined by values of input parameters,
providing a model of the CEET system, the model defined by at least one first model parameter defining the first side, at least one second model parameter defining the second side and a third model parameter defining a magnetic coupling (*k*) or a mutual inductance (M) between the first inductive coil circuit (12) and the second inductive coil circuit (22), wherein the at least one first model parameter comprises an inductance (Lₚ) of the first inductive coil circuit (12), and wherein the at least one second model parameter comprises an inductance (Lₛ) of the second inductive coil circuit (22), the method being **characterised by**
measuring values of first operation parameters at the first side while operating the CEET system in the operating point,
determining an adapted value of the at least one second model parameter on the basis of the values of the first operation parameters and the at least one first model parameter, wherein determining the adapted value of the at least one second model parameter comprises determining a first phase angle between an AC current of the second side and an AC voltage of the first side according to the formula: ${α}_{{I}_{s}} = atan \left(-real\left({{I}_{p}}^{⇀}⋅{Z}_{p}-{{V}_{p}}^{⇀}\right),-imag\left({{I}_{p}}^{⇀}⋅{Z}_{p}\right)\right)$ , wherein *αₗₛ* represents the first phase angle, Zₚ represents an impedance of the first side, Vₚ represents the AC voltage of the first side and ${{I}_{p}}^{⇀}$ represents a current vector of the first side,
measuring values of second operation parameters at the second side while operating the CEET system in the operating point, while transferring electrical power between the first side and the second side,
determining an adapted value of the at least one first model parameter on the basis of the values of the second operation parameters and the at least one second model parameter, wherein determining the adapted value of the at least one first model parameter comprises determining a second phase angle between an AC current of the first side and an AC voltage of the second side according to the formula: ${α}_{{I}_{p}} = atan \left(-real\left({{I}_{s}}^{⇀}⋅{Z}_{s}+{{V}_{s}}^{⇀}\right),imag\left({{I}_{s}}^{⇀}⋅{Z}_{s}\right)\right)$*,* wherein *αₗₚ* represents the second phase angle, Zₛ represents an impedance of the second side, Vₛ represents the AC voltage of the second side, and ${{I}_{s}}^{⇀}$ represents a current vector of the second side.

2. Method of claim 1, wherein:
a first adapted value of the third model parameter is determined on the basis of the values of the first operation parameters and the at least one first model parameter,
a second adapted value of the third model parameter is determined on the basis of the values of the second operation parameters and the at least one second model parameter, and
the first adapted value and the second adapted value are combined to update the third model parameter.

3. Method of any one of the preceding claims, wherein the first operation parameters comprise one or more of: a DC current of the first side, a DC voltage of the first side, an AC current of the first side, and an AC voltage of the first side, optionally wherein the second operation parameters comprise one or more of: a DC current of the second side, a DC voltage of the second side, an AC current of the second side, and an AC voltage of the second side.

4. Method of any one of the preceding claims, wherein the input parameters comprise one or more of: a duty cycle of a pulse width modulation signal, a frequency of the AC voltage of the first side, a switching period of the AC voltage of the first side, a switching period of the AC voltage of the second side, and a frequency of the AC voltage of the second side.

5. Method of any one of the preceding claims, comprising applying the input parameters to the model of the CEET system, determining an output of the model, measuring an output of the CEET system in the operating point, and comparing the output of the model with the output of the CEET system.

6. Method of claim 5, wherein comparing the output of the model with the output of the CEET system comprises measuring a first power loss in the CEET system in the operating point, determining a second power loss according to the model in the operating point, and comparing the first power loss and the second power loss.

7. Method of any one of the preceding claims, wherein the first inductive coil circuit (12) and the second inductive coil circuit (22) are resonant circuits.

8. Method of any one of the preceding claims, wherein initial values of the at least one first model parameter and of the at least one second model parameter are determined prior to determining the adapted values thereof, the initial values being determined outside of the operating point, in particular while the second inductive coil circuit (22) is shorted.

9. Method of any one of the preceding claims, comprising updating a controller defining set points of the CEET system on the basis of the adapted model.

10. A contactless electrical energy transfer, CEET, system (10), comprising:
a first side (100) comprising a first inductive coil circuit (12) and a second side (200) comprising a second inductive coil circuit (22) configured to transfer electrical power between one another, wherein the second side comprises a bridge rectifier (21) coupled to the second inductive coil circuit (22),
a source (9) for applying electrical power to the first side,
a first sensing unit (15) configured for measuring at least one of: a first current at the first side and a first voltage at the first side,
a second sensing unit (25) configured for measuring at least one of: a second current at the second side and a second voltage at the second side,
**characterised by** a control unit (16) coupled to the first sensing unit and to the second sensing unit and operable to carry out the method of any one of the preceding claims.

## Patentansprüche

1. Verfahren zum Betreiben eines kontaktlosen elektrischen Energieübertragungssystems, CEET-Systems (10), umfassend eine Steuereinheit (16), eine erste Seite (100) und eine zweite Seite (200), umfassend eine erste induktive Spulenschaltung (12) beziehungsweise eine zweite induktive Spulenschaltung (22), die konfiguriert sind, um Leistung zwischeneinander zu übertragen, wobei die zweite induktive Spulenschaltung (22) an einen Brückengleichrichter (21) gekoppelt ist, wobei das Verfahren in der Steuereinheit (16) implementiert ist und umfassend:
Betreiben des CEET-Systems in einem Betriebspunkt, wobei elektrische Leistung zwischen der ersten Seite und der zweiten Seite übertragen wird und wobei der Brückengleichrichter (21) eine Ausgabe bereitstellt, wobei der Betriebspunkt durch Werte von Eingabeparametern definiert ist,
Bereitstellen eines Modells des CEET-Systems, wobei das Modell durch mindestens einen ersten Modellparameter, der die erste Seite definiert, mindestens einen zweiten Modellparameter, der die zweite Seite definiert, und einen dritten Modellparameter definiert ist, der eine magnetische Kopplung (*k*) oder eine Gegeninduktivität (M) zwischen der ersten induktiven Spulenschaltung (12) und der zweiten induktiven Spulenschaltung (22) definiert, wobei der mindestens eine erste Modellparameter eine Induktivität (Lₚ) der ersten induktiven Spulenschaltung (12) umfasst und wobei der mindestens eine zweite Modellparameter eine Induktivität (Lₛ) der zweiten induktiven Spulenschaltung (22) umfasst, wobei das Verfahren **gekennzeichnet ist, durch**
Messen von Werten erster Betriebsparameter an der ersten Seite während des Betreibens des CEET-Systems in dem Betriebspunkt,
Bestimmen eines angepassten Werts des mindestens einen zweiten Modellparameters auf der Basis der Werte der ersten Betriebsparameter und des mindestens einen ersten Modellparameters, wobei das Bestimmen des angepassten Werts des mindestens einen zweiten Modellparameters das Bestimmen eines ersten Phasenwinkels zwischen einem Wechselstrom der zweiten Seite und einer Wechselspannung der ersten Seite umfasst, gemäß der Formel: ${α}_{{I}_{s}} = atan \left(-real\left({{I}_{p}}^{⇀}⋅{Z}_{p}-{{V}_{p}}^{⇀}\right),-imag\left({{I}_{p}}^{⇀}⋅{Z}_{p}\right)\right)$, wobei *αₗₛ* den ersten Phasenwinkel darstellt, Zₚ eine Impedanz der ersten Seite darstellt, Vₚ die Wechselspannung der ersten Seite darstellt und ${{I}_{p}}^{⇀}$ einen Stromvektor der ersten Seite darstellt,
Messen von Werten zweiter Betriebsparameter an der zweiten Seite während des Betreibens des CEET-Systems in dem Betriebspunkt, während elektrische Leistung zwischen der ersten Seite und der zweiten Seite übertragen wird,
Bestimmen eines angepassten Werts des mindestens einen ersten Modellparameters auf der Basis der Werte der zweiten Betriebsparameter und des mindestens einen zweiten Modellparameters, wobei das Bestimmen des angepassten Werts des mindestens einen ersten Modellparameters das Bestimmen eines zweiten Phasenwinkels zwischen einem Wechselstrom der ersten Seite und einer Wechselspannung der zweiten Seite umfasst, gemäß der Formel: ${α}_{{I}_{p}} = atan \left(-real\left({{I}_{s}}^{⇀}⋅{Z}_{s}+{{V}_{s}}^{⇀}\right),imag\left({{I}_{s}}^{⇀}⋅{Z}_{s}\right)\right)$, wobei *αₗₚ* den zweiten Phasenwinkel darstellt, Zₛ eine Impedanz der zweiten Seite darstellt, Vₛ die Wechselspannung der zweiten Seite darstellt und ${{I}_{s}}^{⇀}$ einen Stromvektor der zweiten Seite darstellt.

2. Verfahren nach Anspruch 1, wobei:
ein erster angepasster Wert des dritten Modellparameters auf der Basis der Werte der ersten Betriebsparameter und des mindestens einen ersten Modellparameters bestimmt wird,
ein zweiter angepasster Wert des dritten Modellparameters auf der Basis der Werte der zweiten Betriebsparameter und des mindestens einen zweiten Modellparameters bestimmt wird, und
der erste angepasste Wert und der zweite angepasste Wert kombiniert werden, um den dritten Modellparameter zu aktualisieren.

3. Verfahren nach einem der vorstehenden Ansprüche, wobei die ersten Betriebsparameter eines oder mehrere umfassen von: einem Gleichstrom der ersten Seite, einer Gleichspannung der ersten Seite, einem Wechselstrom der ersten Seite und einer Wechselspannung der ersten Seite, optional wobei die zweiten Betriebsparameter eines oder mehrere umfassen von: einem Gleichstrom der zweiten Seite, einer Gleichspannung der zweiten Seite, einem Wechselstrom der zweiten Seite und einer Wechselspannung der zweiten Seite.

4. Verfahren nach einem der vorstehenden Ansprüche, wobei die Eingabeparameter eines oder mehrere umfassen von: einem Tastverhältnis eines Pulsweitenmodulationssignals, einer Frequenz der Wechselspannung der ersten Seite, einer Schaltperiode der Wechselspannung der ersten Seite, einer Schaltperiode der Wechselspannung der zweiten Seite und einer Frequenz der Wechselspannung der zweiten Seite.

5. Verfahren nach einem der vorstehenden Ansprüche, umfassend ein Anwenden der Eingabeparameter auf das Modell des CEET-Systems, das Bestimmen einer Ausgabe des Modells, das Messen einer Ausgabe des CEET-Systems in dem Betriebspunkt und ein Vergleichen der Ausgabe des Modells mit der Ausgabe des CEET-Systems.

6. Verfahren nach Anspruch 5, wobei das Vergleichen der Ausgabe des Modells mit der Ausgabe des CEET-Systems das Messen eines ersten Leistungsverlusts in dem CEET-System in dem Betriebspunkt, das Bestimmen eines zweiten Leistungsverlusts gemäß dem Modell in dem Betriebspunkt und das Vergleichen des ersten Leistungsverlusts und des zweiten Leistungsverlusts umfasst.

7. Verfahren nach einem der vorstehenden Ansprüche, wobei die erste induktive Spulenschaltung (12) und die zweite induktive Spulenschaltung (22) Resonanzschaltungen sind.

8. Verfahren nach einem der vorstehenden Ansprüche, wobei Anfangswerte des mindestens einen ersten Modellparameters und des mindestens einen zweiten Modellparameters bestimmt werden, bevor die angepassten Werte davon bestimmt werden, wobei die Anfangswerte außerhalb des Betriebspunkts bestimmt werden, insbesondere während die zweite induktive Spulenschaltung (22) kurzgeschlossen ist.

9. Verfahren nach einem der vorstehenden Ansprüche, umfassend das Aktualisieren einer Steuerung, die Sollwerte des CEET-Systems auf der Basis des angepassten Modells definiert.

10. Kontaktloses elektrisches Energieübertragungssystem, CEET-System (10), umfassend:
eine erste Seite (100), umfassend eine erste induktive Spulenschaltung (12), und eine zweite Seite (200), umfassend eine zweite induktive Spulenschaltung (22), die konfiguriert sind, um elektrische Leistung zwischeneinander zu übertragen, wobei die zweite Seite einen Brückengleichrichter (21) umfasst, der an die zweite induktive Spulenschaltung (22) gekoppelt ist,
eine Quelle (9) zum Anlegen elektrischer Leistung an die erste Seite,
eine erste Erfassungseinheit (15), die konfiguriert ist zum Messen von mindestens einem von: einem ersten Strom an der ersten Seite und einer ersten Spannung an der ersten Seite,
eine zweite Erfassungseinheit (25), die konfiguriert ist zum Messen von mindestens einem von: einem zweiten Strom an der zweiten Seite und einer zweiten Spannung an der zweiten Seite,
**gekennzeichnet durch** eine Steuereinheit (16), die an die erste Erfassungseinheit und an die zweite Erfassungseinheit gekoppelt und betriebsfähig ist, um das Verfahren nach einem der vorstehenden Ansprüche auszuführen.

## Revendications

1. Procédé de fonctionnement d'un système de transfert d'énergie électrique sans contact, CEET, (10) comprenant une unité de commande (16), un premier côté (100) et un second côté (200) comprenant respectivement un premier circuit bobine inductif (12) et un second circuit bobine inductif (22) conçus pour transférer une puissance entre eux, dans lequel le second circuit bobine inductif (22) est couplé à un redresseur en pont (21), le procédé étant mis en œuvre dans l'unité de commande (16) et comprenant :
le fonctionnement du système CEET en un point de fonctionnement dans lequel une puissance électrique est transférée entre le premier côté et le second côté et dans lequel le redresseur en pont (21) fournit une sortie, le point de fonctionnement étant défini par des valeurs de paramètres d'entrée,
la fourniture d'un modèle du système CEET, le modèle étant défini par au moins un premier paramètre de modèle définissant le premier côté, au moins un deuxième paramètre de modèle définissant le second côté et un troisième paramètre de modèle définissant un couplage magnétique (*k*) ou une inductance mutuelle (M) entre le premier circuit bobine inductif (12) et le second circuit bobine inductif (22), dans lequel l'au moins un premier paramètre de modèle comprend une inductance (Lₚ) du premier circuit bobine inductif (12), et dans lequel l'au moins un deuxième paramètre de modèle comprend une inductance (Lₛ) du second circuit bobine inductif (22), le procédé étant **caractérisé par**
la mesure de valeurs de premiers paramètres de fonctionnement au niveau du premier côté tout en faisant fonctionner le système CEET au point de fonctionnement,
la détermination d'une valeur adaptée de l'au moins un deuxième paramètre de modèle sur la base des valeurs des premiers paramètres de fonctionnement et de l'au moins un premier paramètre de modèle, dans lequel la détermination de la valeur adaptée de l'au moins un deuxième paramètre de modèle comprend la détermination d'un premier angle de phase entre un courant CA du second côté et une tension CA du premier côté selon la formule : ${α}_{{I}_{s}} = atan \left(-real\left({{I}_{p}}^{⇀}⋅{Z}_{p}-{{V}_{p}}^{⇀}\right),-imag\left({{I}_{p}}^{⇀}⋅{Z}_{p}\right)\right)$, dans lequel *αₗₛ* représente le premier angle de phase, Zₚ représente une impédance du premier côté, Vₚ représente la tension CA du premier côté et ${{I}_{p}}^{⇀}$ représente un vecteur de courant du premier côté,
la mesure de valeurs de seconds paramètres de fonctionnement au niveau du second côté tout en faisant fonctionner le système CEET au point de fonctionnement, tout en transférant une puissance électrique entre le premier côté et le second côté,
la détermination d'une valeur adaptée de l'au moins un premier paramètre de modèle sur la base des valeurs des seconds paramètres de fonctionnement et de l'au moins un deuxième paramètre de modèle, dans lequel la détermination de la valeur adaptée de l'au moins un premier paramètre de modèle comprend la détermination d'un second angle de phase entre un courant CA du premier côté et une tension CA du second côté selon la formule : ${α}_{{I}_{p}} = atan \left(-real\left({{I}_{s}}^{⇀}⋅{Z}_{s}+{{V}_{s}}^{⇀}\right),imag\left({{I}_{s}}^{⇀}⋅{Z}_{s}\right)\right)$*,* dans lequel *αₗₚ* représente le second angle de phase, Zₛ représente une impédance du second côté, Vₛ représente la tension CA du second côté, et ${{I}_{s}}^{⇀}$ représente un vecteur de courant du second côté.

2. Procédé selon la revendication 1, dans lequel :
une première valeur adaptée du troisième paramètre de modèle est déterminée sur la base des valeurs des premiers paramètres de fonctionnement et de l'au moins un premier paramètre de modèle,
une seconde valeur adaptée du troisième paramètre de modèle est déterminée sur la base des valeurs des seconds paramètres de fonctionnement et de l'au moins un deuxième paramètre de modèle, et
la première valeur adaptée et la seconde valeur adaptée sont combinées pour mettre à jour le troisième paramètre de modèle.

3. Procédé selon l'une quelconque des revendications précédentes, dans lequel les premiers paramètres de fonctionnement comprennent un ou plusieurs parmi : un courant CC du premier côté, une tension CC du premier côté, un courant CA du premier côté, et une tension CA du premier côté, éventuellement dans lequel les seconds paramètres de fonctionnement comprennent un ou plusieurs éléments parmi : un courant CC du second côté, une tension CC du second côté, un courant CA du second côté, et une tension CA du second côté.

4. Procédé selon l'une quelconque des revendications précédentes, dans lequel les paramètres d'entrée comprennent un ou plusieurs parmi : un cycle de service d'un signal de modulation par largeur d'impulsion, une fréquence de la tension CA du premier côté, un laps de temps de commutation de la tension CA du premier côté, un laps de temps de commutation de la tension CA du second côté, et une fréquence de la tension CA du second côté.

5. Procédé selon l'une quelconque des revendications précédentes, comprenant l'application des paramètres d'entrée au modèle du système CEET, la détermination d'une sortie du modèle, la mesure d'une sortie du système CEET au point de fonctionnement, et la comparaison de la sortie du modèle avec la sortie du système CEET.

6. Procédé selon la revendication 5, dans lequel la comparaison de la sortie du modèle avec la sortie du système CEET comprend la mesure d'une première perte de puissance dans le système CEET au point de fonctionnement, la détermination d'une seconde perte de puissance selon le modèle au point de fonctionnement, et la comparaison de la première perte de puissance et de la seconde perte de puissance.

7. Procédé selon l'une quelconque des revendications précédentes, dans lequel le premier circuit bobine inductif (12) et le second circuit bobine inductif (22) sont des circuits résonants.

8. Procédé selon l'une quelconque des revendications précédentes, dans lequel des valeurs initiales de l'au moins un premier paramètre de modèle et de l'au moins un deuxième paramètre de modèle sont déterminées avant la détermination des valeurs adaptées de ceux-ci, les valeurs initiales étant déterminées en dehors du point de fonctionnement, en particulier pendant que le second circuit bobine inductif (22) est court-circuité.

9. Procédé selon l'une quelconque des revendications précédentes, comprenant la mise à jour d'un dispositif de commande définissant des points de consigne du système CEET sur la base du modèle adapté.

10. Système de transfert d'énergie électrique sans contact, CEET, (10), comprenant :
un premier côté (100) comprenant un premier circuit bobine inductif (12) et un second côté (200) comprenant un second circuit bobine inductif (22) conçus pour transférer une puissance électrique entre eux, dans lequel le second côté comprend un redresseur en pont (21) couplé au second circuit bobine inductif (22),
une source (9) pour l'application d'une puissance électrique au premier côté,
une première unité de détection (15) conçue pour la mesure d'au moins l'un parmi : un premier courant au niveau du premier côté et une première tension au niveau du premier côté,
une seconde unité de détection (25) conçue pour la mesure d'au moins l'un parmi : un second courant au niveau du second côté et une seconde tension au niveau du second côté,
**caractérisé par** une unité de commande (16) étant couplée à la première unité de détection et à la seconde unité de détection et pouvant fonctionner pour mettre en œuvre le procédé selon l'une quelconque des revendications précédentes.
